# EUROPÄISCHE PATENTSCHRIFT

(11) **EP 2 122 236 B1**
(45) Veröffentlichungstag und Bekanntmachung des Hinweises auf die Patenterteilung: **14.09.2011**
(21) Anmeldenummer: 07846941.8
(22) Anmeldetag: 01.12.2007
(51) Int. Cl.: F21S 8/10, G02B 6/00

(54) **FAHRZEUGLEUCHTE**
VEHICLE LIGHT
PHARE POUR VÉHICULES

(30) Priorität: 22.12.2006 DE 102006062272
(43) Veröffentlichungstag der Anmeldung: 25.11.2009
(73) Patentinhaber: Bayerische Motoren Werke Aktiengesellschaft, 80809 München (DE)
(72) Erfinder: HEIDINGER, Juergen, 80993 Muenchen (DE)
(74) Vertreter: Mayer-Martin, Christian
(86) Internationale Anmeldenummer: PCT/EP2007/010452
(87) Internationale Veröffentlichungsnummer: WO 2008/080475

(56) Entgegenhaltungen:
- EP-A- 1 657 111
- EP-A- 1 775 511
- DE-A1- 19 831 002

## Beschreibung

Die Erfindung betrifft eine Fahrzeugleuchte, insbesondere eine Heckleuchte eines Kraftfahrzeuges.

Ein Schwerpunkt der weiter rasanten technologischen Entwicklung auf dem Gebiet der Kraftfahrzeugbeleuchtungstechnik liegt darin, den Designabteilungen der Kraftfahrzeughersteller mit neuen technischen Ansätzen weitere Design-Freiheitsgrade zu eröffnen. So sollen Fahrzeugleuchten geschaffen werden, welche bei Einhaltung der gesetzlichen Vorschriften und unter Berücksichtigung der ökonomischen und konstruktiven Rahmenbedingungen mit dem Design eines Kraftfahrzeuges harmonieren oder dieses sogar prägen.

Neben den konstruktiven Vorgaben an bestimmte Baugrößen und Formen, unter Berücksichtigung der gesetzlichen Vorgaben bezüglich der Lichtfunktionen und der Lichtverteilung, sollen Fahrzeugleuchten auch ein harmonisches Erscheinungsbild vermitteln. Insbesondere bei Heckleuchten, bei denen zudem eine möglichst geringe Bautiefe verlangt wird, um die Leuchte im flachen Heckklappen- und/oder Heckseitenbereich in die Fahrzeugkarosserie zu integrieren, ist die Vereinbarung von Funktion, Konstruktion und optischem Design jedoch schwierig.

Bekannte Heckleuchten verwenden stabförmige Lichtleiter, wie sie beispielsweise in der DE 100 29 542 A1 oder EP 1 657 111 A2 beschrieben sind, bei denen das erforderliche Licht an den Lichtleiterenden vorzugsweise über LEDs (lichtemittierende Dioden) eingekoppelt wird. Der größte Teil des eingekoppelten Lichts wird quer zur Längsrichtung des Lichtleiters über eine gegenüber einer reflektierenden Fläche liegenden transparenten Lichtaustrittsfläche nach außen abgestrahlt. Durch die reflektierende Fläche kann eine Abstrahlcharakteristik, d.h. eine bestimmte Lichtverteilung, beispielsweise eine möglichst gleichmäβige Abstrahlung über eine bestimmte Fläche, gestaltet werden. Dies wird beispielsweise mit einer Vielzahl von Prismenelementen an der reflektierenden Fläche erreicht. Die Prismierung kann auch, in Wirkverbindung mit einer entsprechend geformten Lichtaustrittfläche, zusätzlich die Funktion eines Rückstrahlers (so genannten Retroreflektors) übernehmen, der von außen auf die Leuchte auftreffendes Licht zurückwirft.

Nachteilig daran ist, dass auf diese Weise zwar eine relativ geringe Bautiefe einer Leuchte realisierbar ist, wie sie insbesondere im Fahrzeugheckbereich gefordert wird, dabei aber durch eine klare Lichtabschlussscheibe, die jeweilige Prismenstruktur deutlich sichtbar ist. Diese Prismenstruktur kann mitunter auf den optischen Eindruck störend, insbesondere inhomogen, wirken. Aufgrund ihrer Transparenz (an der Lichtaustrittsfläche) und ihrer geringen Bautiefe erscheinen zudem die Lichtleiter im Tages- und Nachtdesign, d.h. sowohl ausgeschaltet ohne Licht als auch eingeschaltet mit Licht eher unvorteilhaft zweidimensional.

Weiterhin sind beispielsweise aus der DE 199 507 00 A1, der DE 44 25 401 A1 und der DE 103 43 639 A1 Fahrzeugleuchten bekannt, die mit einer Durchlichttechnik arbeiten, bei denen zwischen einer Lichtquelle und einer Lichtscheibe zur Erzielung einer bestimmen Lichtverteilung oder Farbgebung zumindest in Teilbereichen optische Flächenelemente, wie Linsenoptiken, Prismenscheiben oder Farbscheiben angeordnet sind, die rückwärtig von einer Glühlampe und/oder einer LED, über einen Reflektor durchstrahlt werden.

Nachteilig wirkt sich aus, dass die Linsenoptiken, Prismenscheiben oder Farbscheiben sowie die Reflektoren eher asymmetrisch auf den Gesamteindruck der Leuchte wirken, da sie zur Erzeugung einer vorgegebenen Abstrahlcharakteristik dienen und entsprechend konstruiert sind. Dabei kann das optische Design allenfalls untergeordnet berücksichtigt werden. Zudem benötigt die Durchlichttechnik mit komplexen Reflektoren in Kombination mit Glühlampen und/oder LEDs als Lichtquellen relativ viel Bauraum. Daher sind diese Leuchten für Heckleuchten im flachen Heckklappen- und Seitenbereich eher ungeeignet.

Der Erfindung liegt nun die Aufgabe zu Grunde, eine Fahrzeugleuchte anzugeben, die bei Einhaltung gesetzlicher Vorgaben ein homogenes Erscheinungsbild vermittelt.

Diese Aufgabe wird durch die Merkmale des Hauptanspruchs gelöst. Vorteilhafte Weiterbildungen der Erfindung sind den abhängigen Ansprüchen zu entnehmen.

Die Erfindung basiert demnach auch auf dem Gedanken, in eine lichtleiterbasierte Fahrzeugleuchte Aufweitmittel und Umlenkmittel zu integrieren, um einen diffus und homogen leuchtenden Körper zu realisieren, mit dem dennoch auf relativ effiziente Art und Weise gesetzlich vorgegebene Lichtverteilungsanforderungen erfüllt werden können.

Vorzugsweise umfasst die Fahrzeugleuchte dazu mindestens eine Lichtquelle, wie eine Leuchtdiode, und zumindest einen, insbesondere quaderförmigen oder einen rechteckigen Querschnitt aufweisenden, Lichtleiter in den das Licht der Lichtquelle, insbesondere an zumindest einer Einkoppelfläche, eingekoppelt wird.

Zudem sind Mittel zum Aufweiten des Öffnungswinkels, insbesondere zum Streuen oder zum teilweise diffusen Reflektieren, eines auf ein Mittel zum Aufweiten einfallenden Lichtbündels oder Lichtreflexes vorgesehen. Die Mittel zum Aufweiten des Öffnungswinkels bewirken vorzugsweise, dass das auf sie treffende Licht diffuser wird, und/oder dass die Vorzugsrichtung des auf sie treffenden Lichts abgeschwächt wird.

Außerdem sind Mittel zum Umlenken, insbesondere zum gerichteten Reflektieren, eines auf ein Mittel zum Umlenken einfallenden Lichtbündels vorgesehen, die auf einer hinter einer Rückseite des Lichtleiters angeordneten Reflektoreinrichtung aufgebracht oder integriert sind, oder die an der Rückseite des Lichtleiters oder in dem Lichtleiter integriert sind. Die verschiedenen Mittel zum Umlenken bewirken jeweils eine Umlenkung einfallenden Lichts oder einfallender Lichtbündel, insbesondere eines wesentlichen Lichtbündels.

Durch die Mittel zum Aufweiten des Öffnungswinkels einfallenden Lichtes wird bewirkt, dass das im Lichtleiter geführte Licht teilweise diffus wird, und teilweise diffus aus dem Lichtleiter ausgekoppelt wird. Dadurch kann für viele Beobachtungsrichtungen das gewünschte hochwertige und homogene Erscheinungsbild des Lichtleiters bewirkt werden. Allerdings zeigten aufwändige Untersuchungen, dass ein solcher Lichtleiter, der lediglich Mittel zum Aufweiten des Öffnungswinkels einfallenden Lichtes aufweist, sehr ineffizient ist, insbesondere dann, wenn gesetzliche Vorgaben hinsichtlich der insgesamt abgestrahlten Lichtverteilung zu erfüllen sind. Es zeigte sich auch, dass ein einfacher Reflektor, beispielsweise eine spiegelnde Schicht hinter dem Lichtleiter die Effizienz nicht ausreichend erhöht.

Die Erfindung basiert nun auf der Erkenntnis, dass das durch die Mittel zum Aufweiten aufgeweitete im Lichtleiter geführte Licht und das ausgekoppelte Licht nur teilweise diffus ist. Durch die Mittel zum Aufweiten des Öffnungswinkels eines einfallenden Lichtbündels wird also bewirkt, dass der Öffnungswinkel des Lichtbündels zwar größer wird, aber dennoch eine definierte Vorzugsrichtung aufweist oder behält. Es zeigte sich auch, dass aus dem Lichtleiter Licht jeweils an der Vorderseite und der Rückseite an verschiedenen Auskoppelorten mit verschiedenen Vorzugsrichtungen austritt. Als Vorzugsrichtung eines Lichtbündels kann beispielsweise die Schwerpunktrichtung, insbesondere die Durchschnittsrichtung der mit der jeweiligen Lichtstärke gewichteten Lichtrichtungen eines Lichtbündels, oder die Hauptrichtung, insbesondere die Lichtrichtung eines Lichtbündels mit maximaler Lichtstärke, verwendet werden.

Diese Erkenntnis nützt die Erfindung dadurch aus, dass das an der Rückseite des Lichtleiters ausgekoppelte Licht durch die Mittel zum Umlenken hinter der Rückseite des Lichtleiters gezielt und in Abhängigkeit von den verschiedenen Vorzugsrichtungen des ausgekoppelten Lichtes umgelenkt wird, so dass auf der Rückseite des Lichtleiters ausgekoppeltes Licht zu einem relativ großen Anteil wieder in den Lichtleiter eintritt, und mit definierten Vorzugsrichtungen wieder an der Vorderseite des Lichtleiters austritt. Die definierten Vorzugsrichtungen können dabei in Abhängigkeit von gesetzlichen Lichtverteilungsvorgaben oder Lichtstärkeverteilungsvorgaben unter Berücksichtigung der verschiedenen Vorzugsrichtungen des an der Vorderseite ohnehin ausgekoppelten Lichts, das keine Umlenkung durch ein Mittel zum Umlenken erfahren hat, gewählt werden.

Durch die Erfindung wird also die Effizienz einer teilweise diffus leuchtenden Fahrzeugleuchte unter Berücksichtigung gesetzlicher Lichtverteilungsvorgaben oder Lichtstärkeverteilungsvorgaben dadurch erhöht, dass das teilweise diffus an der Rückseite des Lichtleiters ausgekoppelte Licht unter Berücksichtigung und Nutzung seiner verschiedenen Vorzugsrichtungen gezielt derart umgelenkt wird, dass es - nachdem es durch den Lichtleiter transmittiert wurde - einen wichtigen Beitrag zur Realisierung der gesetzlichen Lichtverteilungsvorgaben oder Lichtstärkeverteilungsvorgaben leistet. Insbesondere wird durch das an den Mitteln zum Umlenken umgelenkte und schließlich an der Vorderseite mit verschiedenen Vorzugsrichtungen austretende Licht das ohnehin an der Vorderseite mit verschiedenen Vorzugsrichtungen ausgekoppelte Licht derart ergänzt, dass gesetzliche Lichtverteilungsvorgaben oder Lichtstärkeverteilungsvorgaben energieeffizient umgesetzt werden können. Dazu kann das auf der Rückseite des Lichtleiters ausgekoppelte Licht gezielt und abhängig vom Auskoppelort durch geeignete und an den Auskoppelort und/oder die entsprechende Vorzugsrichtung angepasste Mittel zum Umlenken umgelenkt werden, so dass an der Vorderseite des Lichtleiters an verschiedenen Orten, insbesondere kontinuierlich auf einer vorgegeben Abstrahlfläche, Licht im Wesentlichen mit identischen Gesamtvorzugsrichtungen abgestrahlt wird.

Vorzugsweise wird durch ein Aufweiten der Lichtbündel in einem Lichtleiter teilweise diffuses Licht (Licht mit einem relativ großen Öffnungswinkel, aber dennoch einer Vorzugsrichtung) an der Vorderseite und an der Rückseite des Lichtleiters ausgekoppelt. Das an der Rückseite ausgekoppelte Licht wird durch - vom Lichtleiter separate - Mittel zum Umlenken umgelenkt und tritt schließlich zusammen mit dem direkt aus dem Lichtleiter an der Vorderseite ausgekoppelten Licht an der Vorderseite des Lichtleiters aus. Die Mittel zum Umlenken sind dabei vorteilhafterweise derart ausgeführt, dass unter Berücksichtigung der verschiedenen Vorzugsrichtungen des an der Rückseite des Lichtleiters ausgekoppelten Lichts die verschiedenen Lichtbündel gerade so umgelenkt werden, dass sie schließlich nach Eintritt in den Lichtleiter und Austritt aus dem Lichtleiter an der Vorderseite des Lichtleiters zusammen mit den direkt an der Vorderseite des Lichtleiters aus dem Lichtleiter ausgekoppelten Lichtbündeln an verschiedenen Orten eine im Wesentlichen identische Gesamt-Vorzugsrichtung aufweisen.

Durch die Abstrahlung teilweise diffuser Lichtbündel wird so ein in ästhetischer Hinsicht ausreichend diffus leuchtender Lichtleiter geschaffen, der aber aufgrund der gezielten Beeinflussung der verschiedenen Vorzugsrichtungen verschiedener teilweise diffuser Lichtbündel auf effiziente Weise die gesetzlichen Vorgaben erfüllt.

Grundsätzlich ist von der Erfindung auch eine Fahrzeugleuchte mit im Lichtleiter integrierten Mitteln zum Umlenken, beispielsweise mit einer erfindungsgemäß ausgeführten Prismenstruktur, umfasst. Dies hat aber den Nachteil, dass insbesondere im ausgeschalteten Zustand der Fahrzeugleuchte oder des Lichtleiters durch den Lichtleiter hindurch auf der Rückseite des Lichtleiters die Prismenstruktur sichtbar wird. Dies ist auch aus ästhetischen Gründen bei einer Fahrzeugleuchte unerwünscht. Vorzugsweise sind daher die Mittel zum Umlenken oder die Reflektoreinrichtung separat von dem Lichtleiter gebildet, oder sind die Mittel zum Umlenken oder die Reflektoreinrichtung kein integraler Bestandteil des Lichtleiters. Insbesondere haben die Mittel zum Umlenken keinen unmittelbaren Kontakt zu dem Lichtleiter. Dadurch wird erreicht, dass die Fahrzeugleuchte, insbesondere der Lichtleiter, im eingeschalteten und im ausgeschalteten Zustand ein homogenes Erscheinungsbild aufweist, das insbesondere im ausgeschalteten Zustand nicht wesentlich durch durchscheinende Umrisse der Umlenkmittel beeinflusst wird. Durch die Realisierung der Umlenkmittel hinter dem Lichtleiter oder separat vom Lichtleiter wird auch erreicht, dass nur ausgekoppeltes Licht durch die Mittel zum Umlenken umgelenkt wird, dass das im Lichtleiter geführte Licht aber durch die Mittel zum Umlenken nicht beeinflusst wird. Dies bringt auch deshalb Effizienzvorteile, weil ein Umlenken durch Mittel zum Umlenken mit einer Absorption von Licht verbunden sein kann. Eine solche Absorption durch die externen Mittel zum Umlenken tritt aber für das im Lichtleiter geführte Licht nicht ein.

Selbstverständlich umfasst die Erfindung auch Fahrzeugleuchten mit einem Lichtleiter, der Licht nicht nur an der Vorderseite, sondern auch an anderen Flächen, insbesondere an der Oberseite und der Unterseite abstrahlt. Dadurch erscheint der Lichtleiter wie ein glühender dreidimensionaler Körper oder eine Lichtbank. Es können mehrere solcher Lichtbänke nebeneinander in einer Fahrzeugleuchte eingesetzt werden. Insbesondere der Umriss der Vorderseite des Lichtleiters und die dreidimensionale Form des Lichtleiters, die beispielsweise durch einen geraden oder "gebogenen" Quader bestimmt sein kann, kann in gestalterischer Hinsicht relativ frei gewählt werden.

Besonders bevorzugt ist vorgesehen, dass Mittel zum Umlenken des Lichtes eine Facettenstruktur umfassen, insbesondere eine auf einer Reflektoreinrichtung angeordnete Facettenstruktur, eine in einer Reflektoreinrichtung integrierte Facettenstruktur, einen facettierten Spiegel, einen Stufenspiegel oder einen gestuften Reflektor umfassen.

Mittel zum Aufweiten des Lichtes sind vorzugsweise durch in dem Lichtleiter integrierte Streuelemente (Volumenstreuer) und/oder Rauhigkeiten auf zumindest einer Oberfläche des Lichtleiters realisiert. Bei Einsatz von Volumenstreuern basiert das Aufweiten des Öffnungswinkels (das "Diffus-Machen") auf Volumeneffekten, wohingegen das Aufweiten des Öffnungswinkels durch Rauhigkeiten, insbesondere durch teilweise diffuse Reflexion, auf Oberflächeneffekten beruht. Insbesondere bei außerhalb des Lichtleiters realisierten Mitteln zum Umlenken sind die Mittel zum Aufweiten vorzugsweise integraler Bestandteil des Lichtleiters. Besonders bevorzugt sind zumindest die Vorderseite, die Oberseite, die Unterseite und/oder Rückseite des Lichteiters aufgerauht oder genarbt, um den Öffnungswinkel der auf sie treffenden Lichtbündel aufzuweiten, und damit das im Lichtleiter geführte (totalreflektierte) und das schließlich ausgekoppelte Licht diffus zu machen.

Vorteilhafterweise sind die Mittel zum Aufweiten derart ausgeführt, dass Licht, insbesondere teilweise diffuse jeweils eine Vorzugsrichtung aufweisende Lichtbündel, an der Vorderseite des Lichtleiters an verschiedenen Vorder-Auskoppelorten mit verschiedenen Vorzugsrichtungen ausgekoppelt wird und Licht, insbesondere teilweise diffuse jeweils eine Vorzugsrichtung aufweisende Lichtbündel, an der Rückseite des Lichtleiters an verschiedenen Rück-Auskoppelorten mit verschiedenen Vorzugsrichtungen ausgekoppelt wird. Dadurch bewirken die Mittel zur Aufweitung des Öffnungswinkels auch eine teilweise Auskopplung des Lichtes aus dem Lichtleiter, das ohne Mittel zur Aufweitung des Öffnungswinkels basierend auf der Totalreflexion weitgehend in dem Lichtleiter geführt werden würde. Die verschiedenen Auskoppelorte stehen vorzugsweise exemplarisch für verschiedene Abschnitte der auskoppelnden Vorderseite oder Rückseite des Lichtleiters. Das ausgekoppelte Licht kann dabei, insbesondere ohne Berücksichtigung des Einflusses der Mittel zum Umlenken, entlang der Auskoppelfläche (Vorderseite oder Rückseite) stetig oder unstetig kontinuierlich oder diskret seine Intensität; insbesondere die Leuchtdichte, oder seine Vorzugsrichtung ändern.

Durch die Mittel zum Aufweiten kann der Lichtleiter bei einer Ausführungsvariante der Erfindung im ausgeschalteten Zustand nahezu undurchsichtig sein. Gegenstände hinter dem Lichtleiter, insbesondere Mittel zur Umlenkung oder Befestigung, können dann mit geringerem Konstruktionsaufwand realisiert sein. Somit wird eine einfach und kostengünstig herstellbare Leuchte in hochwertigem Design zur Verfügung gestellt.

Vorteilhafterweise sind die Mittel zum Umlenken derart hinter der Rückseite des Lichtleiters ausgeführt, dass durch die Mittel zum Umlenken umgelenktes Licht wieder an der Rückseite des Lichtleiters eintritt und an der Vorderseite des Lichtleiters an verschiedenen Austrittsorten mit verschiedenen Vorzugsrichtungen austritt (im Rahmen der Erfindung werden in diesem Zusammenhang nicht die Bezeichnungen "einkoppeln" und "auskoppeln" verwendet), also durch den Lichtleiter transmittiert. Dadurch kann auch das an der Rückseite ausgekoppelte Licht zur Erfüllung der gesetzlichen Vorgaben eingesetzt werden und einen Beitrag zum homogenen Erscheinungsbild liefern..

Vorzugsweise sind die Mittel zum Umlenken und/oder die Mittel zum Aufweiten derart ausgeführt, dass das insgesamt an der Vorderseite des Lichtleiters austretende (durch Mittel zum Umlenken umgelenkte) und/oder ausgekoppelte Licht eine vorgegebene Lichtverteilung oder Lichtstärkeverteilung bewirkt, insbesondere dadurch, dass das an der Vorderseite des Lichtleiters austretende (durch Mittel zum Umlenken umgelenkte) und/oder ausgekoppelte Licht an verschiedenen Orten oder an allen Orten einer vorgegebenen Abstrahlfläche im Wesentlichen die gleiche Gesamt-Vorzugsrichtung aufweist.

Besonders bevorzugt sind die Mittel zum Umlenken und/oder die Mittel zum Aufweiten derart ausgeführt, dass durch Mittel zum Umlenken umgelenktes an der Vorderseite an verschiedenen Austrittsorten austretendes Licht zusammen mit dem an der Vorderseite an verschiedenen Vorder-Auskoppelorten ausgekoppelten Licht eine vorgegebene Lichtverteilung oder Lichtstärkeverteilung bewirkt und/oder an verschiedenen Austrittsorten bzw. Vorder-Auskoppelorten im Wesentlichen eine identische Gesamt-Vorzugsrichtung aufweist. Insbesondere bei einer Fahrzeug-Hecklampe sind die Mittel zum Umlenken und die Mittel zum Aufweiten derart ausgeführt, dass die Gesamt-Vorzugsrichtung parallel zur Fahrzuglängsachse liegt. Denn die vorgegebene zu erfüllende Lichtverteilung oder Lichtstärkeverteilung schreibt häufig gerade für diese Richtung die größte Lichtstärke vor.

Um innerhalb einer vorgegebenen Abstrahlfläche, die auch Teil einer Gesamtabstrahlfläche sein kann, nicht nur eine im Wesentlichen einheitliche Gesamt-Vorzugsrichtung des ausgekoppelten Lichtes, sondern auch eine im Wesentlichen einheitliche Leuchtdichte zu gewährleisten, wird vorgeschlagen, Mittel zum Umlenken derart auszuführen, dass näher an der Lichtquelle liegende Mittel zum Umlenken eine weniger effiziente Umlenkung einfallenden Lichtes bewirken als entfernter zur Lichtquelle liegende Mittel zum Umlenken. Alternativ oder ergänzend dazu ist vorgesehen, dass die Mittel zum Aufweiten und damit zum Auskoppeln derart ausgeführt sind, dass näher an der Lichtquelle liegende Mittel zum Aufweiten eine weniger effiziente Auskopplung einfallenden Lichtes bewirken als entfernter zur Lichtquelle liegende Mittel zum Aufweiten. Beispielsweise kann die Konzentration oder die Abmessungen der Volumenstreuer nahe bei der Lichtquelle geringer sein, oder der Rauhigkeitsgrad nahe bei der Lichtquelle geringer sein bzw. die Rauhigkeitsflächen nahe der Lichtquelle kleiner sein.

Besonders praktisch ist eine Fahrzeugleuchte, wenn sie zudem eine transparente Lichtabschlussscheibe aufweist. Während die Mittel zum Aufweiten das Erscheinungsbild der Leuchte für verschiedene Blickrichtungen homogenisieren, vermitteln die dreidimensionalen Lichtleiter dann hinter der transparenten Lichtabschlussscheibe den Eindruck einer räumlichen Tiefe.

Im Folgenden wird die Erfindung anhand von Beispielen unter Bezugnahme auf die folgenden Figuren näher erläutert:
- Figur 1: zeigt eine prinzipielle Schnittdarstellung eines Lichtleiters;
- Figur 2: zeigt eine prinzipielle Schnittdarstellung eines Lichtleiters samt Reflektoreinrichtung.

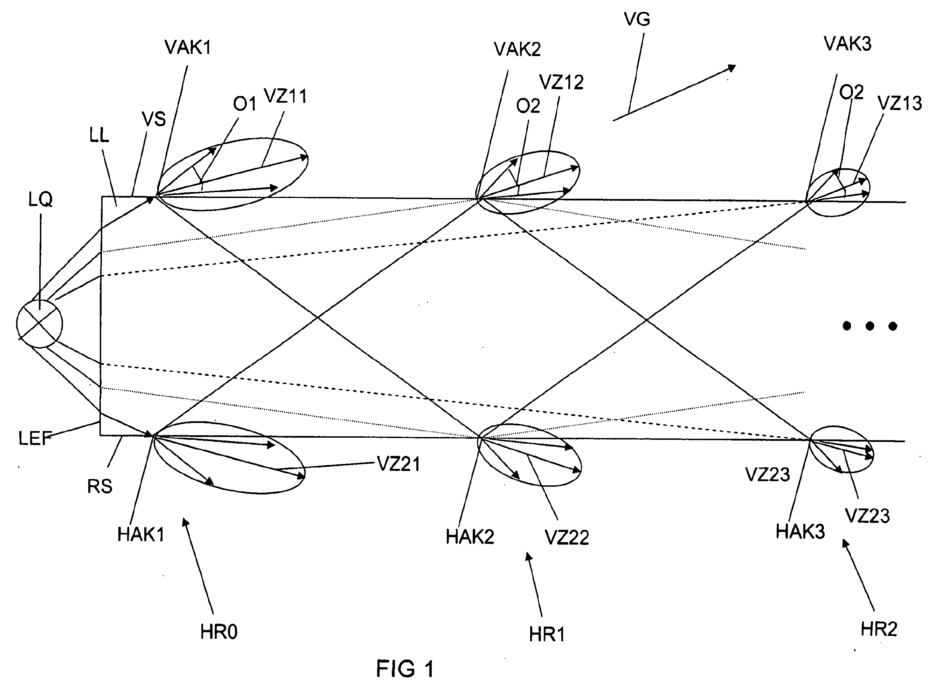

Als Teil einer Fahrzeugleuchte ist in Figur 1 ein quaderförmiger Lichtleiter LL im Längsschnitt dargestellt. In den Lichtleiter LL wird an einer Einkoppelfläche LEF Licht einer Lichtquelle LQ eingekoppelt. Das eingekoppelte Licht wird grundsätzlich im Lichtleiter LL entlang der Längsrichtung des Lichtleiters LL geführt, wird aber an den Stellen, an denen die Bedingungen für eine Totalreflexion nicht erfüllt sind, aus dem Lichtleiter LL ausgekoppelt.

Durch nicht dargestellte Mittel zur Aufweitung, beispielsweise Volumenstreuer im Lichtleiter LL oder Rauhigkeiten auf einer oder mehreren Oberflächen des Lichtleiters LL, wird der Öffnungswinkel einfallender Lichtbündel vergröβert. Dadurch erfüllt ein größerer Teil des ursprünglich von der seitlichen Einkoppelfläche LEF eingekoppelten Lichts die Bedingungen für eine Totalreflexion an einer Grenzfläche des Lichtleiters LL nicht mehr. Dadurch wird Licht an verschiedenen Stellen des Lichtleiters LL oder kontinuierlich entlang des Lichtleiters LL ausgekoppelt. Insbesondere wird Licht an der Vorderseite VS des Lichtleiters LL und an der Rückseite RS des Lichtleiters LL ausgekoppelt.

In der Figur 1 sind exemplarisch jeweils drei Auskoppelereignisse für die Vorderseite VS und die Rückseite RS des Lichtleiters LL dargestellt, welche jeweils den 0-ten (HR0), 1-ten (HR1), und 2-ten Hauptreflex (HR3) repräsentieren.

Der 0-te Hauptreflex HR0 beschreibt die am nächsten zur Einkoppelfläche LEF liegende erste Reflexion eingekoppelten ungestreuten Lichtes an der entsprechenden Grenzfläche, insbesondere an der Vorderseite VS oder Rückseite RS des Lichtleiters LL.

Aufgrund von nicht dargestellten Mitteln zur Aufweitung trifft jedoch nicht lediglich ein eigekoppelter Lichtstrahl auf den entsprechenden Ort VAK1,HAK1 des 0-ten Hauptreflexes HR0 auf der Vorderseite VS oder Rückseite RS des Lichtleiters LL, sondern jeweils ein Strahlenbündel mit einer Vorzugsrichtung und einem Öffnungswinkel. Der Teil des Strahlenbündels, der die Bedingungen für eine Totalreflexion an dem Ort VAK1, HAK1 nicht erfüllt, wird an dem Ort VAK1, HAK1 aus dem Lichtleiter LL als Strahlenbündel mit einer Vorzugsrichtung VZ11, VZ21 und einem Öffnungswinkel 01 ausgekoppelt. Der Öffnungswinkel kann hier je nach Realisierungsvariante unterschiedlich definiert sein. Je größer der Öffnungswinkel, desto diffuser das entsprechende Lichtbündel oder desto breiter die entsprechende Lichtstärkeverteilung. Es kann aber beispielsweise auch noch außerhalb des Öffnungswinkels Licht abgestrahlt werden, das aber beispielsweise hinsichtlich der Lichtstärke unter einem Schwellwert liegt.

Der Ort VAK1,HAK1 des 0-ten Hauptreflexes HR0 auf der Vorderseite VS oder Rückseite RS des Lichtleiters LL wird auch bestimmt durch den Öffnungswinkel des von der Lichtquelle LQ abgestrahlten Lichtbündels.

Der 1-te Hauptreflex HR1 beschreibt die am nächsten zur Einkoppelfläche LEF liegende zweite Reflexion des eingekoppelten ungestreuten Lichtes an der der ersten Reflexion gegenüberliegenden Grenzfläche, insbesondere an der Rückseite RS oder Vorderseite VS, des Lichtleiters LL. Auch hier wird wieder an dem entsprechenden Ort VAK2, HAK2 des 1-ten Hauptreflexes HR1 auf der Vorderseite VS oder Rückseite RS des Lichtleiters LL jeweils ein Lichtbündel mit einer Vorzugsrichtung VZ12, VZ22 und einem Öffnungswinkel 02 ausgekoppelt.

Der 2-te Hauptreflex HR2 beschreibt die am nächsten zur-Einkoppelfläche LEF liegende dritte Reflexion des eingekoppelten ungestreuten Lichtes an der der zweiten Reflexion gegenüberliegenden Grenzfläche, insbesondere an der Vorderseite VS oder Rückseite RS, des Lichtleiters LL. Auch hier wird wieder an dem entsprechenden Ort VAK3, HAK3 des 2-ten Hauptreflexes HR2 auf der Vorderseite VS oder Rückseite RS des Lichtleiters LL, jeweils Licht mit einer Vorzugsrichtung VZ13, VZ23 und einem Öffnungswinkel 03 ausgekoppelt.

Selbstverständlich wird auch zwischen den Orten der Hauptreflexe und nach den 3 genannten Hauptreflexen Licht aus dem Lichtleiter ausgekoppelt. Dies ist lediglich aus Gründen der Übersichtlichkeit nicht dargestellt.

Zudem sei an dieser Stelle darauf hingewiesen, dass die Figuren, insbesondere die Darstellung der Pfeillängen, der Pfeilrichtungen und der Öffnungswinkel, lediglich das Verständnis für das Prinzip und die Realisierungsvarianten der Erfindung vertiefen sollen, dass diese aber insbesondere in quantitativer Hinsicht nicht der Realität entsprechen.

Bei dem Lichtleiter LL gemäß Figur 1 wird im Ergebnis an der Vorderseite VS und der Rückseite RS Licht an verschiedenen Orten VAK1, VAK2, VAK3, HAK1, HAK2, HAK3 mit verschiedenen Vorzugsrichtungen VZ11, VZ12, VZ13, VZ21, VZ22, VZ23 ausgekoppelt. Das an der Vorderseite VS ausgekoppelte Licht kann dabei seinen Beitrag zur Erfüllung vorgegebener Lichtstärkeverteilungen leisten, das an der Rückseite RS ausgekoppelte Licht nicht. Die Realisierung einer vorgegebenen Lichtstärkeverteilung mit dem an der Vorderseite VS ausgekoppelten Licht ist allerdings allenfalls mit sehr hohen eingekoppelten Lichtströmen möglich, da das gesamte an der Vorderseite VS ausgekoppelte Licht aufgrund der Einkopplung von einer seitlichen Einkoppelfläche LEF eine von der Lichtquelle LQ weg weisende Vorzugsrichtung VG aufweist, und somit bei einer Integration eines solchen Lichtleiters in eine Fahrzeugheckleuchte eher der Fahrbahnrand als der hinter dem Fahrzeug liegende Bereich beleuchtet werden würde. Zudem würde eine solche Fahrzeugheckleuchte kein flächig homogenes Erscheinungsbild vermitteln.

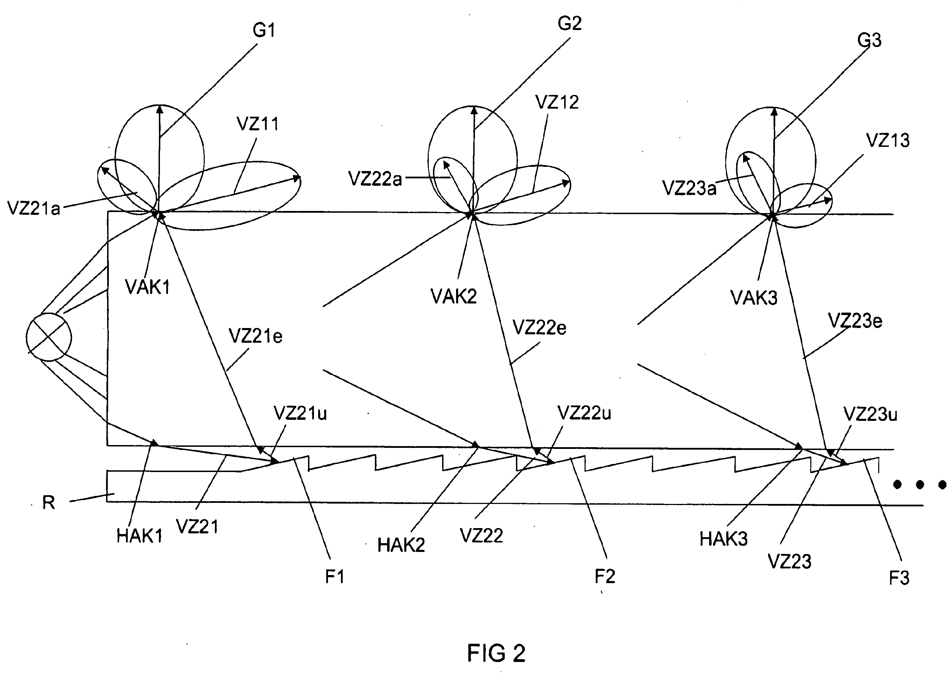

Durch eine spiegelnde Fläche auf oder hinter der Rückseite RS des Lichtleiters LL könnte zwar eine unerwünschte Auskopplung von Licht an der Rückseite RS des Lichtleiters LL verhindert oder rückgängig gemacht werden, so dass dieses Licht schließlich auch an der Vorderseite VS ausgekoppelt werden könnte. Allerdings hätte das derart an der Vorderseite VS ausgekoppelte Licht eine ähnliche von der Lichtquelle LQ weg weisende Vorzugsrichtung wie das unmittelbar an der Vorderseite ausgekoppelte Licht. Daher ist auch mit so einer einfachen reflektierenden Rückseite die Realisierung eines homogen und diffus leuchtenden Körpers bei gleichzeitiger Erfüllung vorgegebener Lichtstärkeverteilungen nur auf relativ ineffiziente Weise möglich sein. Figur 2 zeigt nun den Lichtleiter LL aus Figur 1 mit einer hinter der Rückseite RS angeordneten Reflektoreinheit R samt senkrecht zur Längsrichtung des Lichtleiters LL verlaufenden Facetten F1, F2, F3 als Mittel zum Umlenken des an der Rückseite RS ausgekoppelten Lichts. Die im Lichtleiter LL ausgeführten Mittel zum Aufweiten sind wieder nicht dargestellt.

Die Mittel zum Umlenken F1, F2, F3 sind dabei abhängig von ihrem Ort und angepasst an die auf sie einfallenden Lichtbündel, insbesondere angepasst an die Vorzugsrichtung eines wesentlichen auf sie einfallenden Lichtbündels, derart ausgeführt, dass das insgesamt an der Vorderseite VS des Lichtleiters LL austretende und/oder ausgekoppelte Licht an verschiedenen Orten auf der Vorderseite VS im Wesentlichen die gleiche Gesamt-Vorzugsrichtung G1, G2, G3 aufweist.

Das auf der Rückseite RS an den verschiedenen Hinter-Auskoppelorten HAK1, HAK2, HAK2 mit entsprechend verschiedenen Vorzugsrichtungen VZ21, VZ22, VZ23 ausgekoppelte Licht wird von den verschieden geneigten reflektierenden Flächen der F1, F2, F3 jeweils in verschiedene Vorzugsrichtungen VZ21 u, VZ22u, VZ23u umgelenkt.

Das derart umgelenkte Licht oder die derart umgelenkten Lichtbündel treten jeweils wieder in den Lichtleiter LL ein und treffen jeweils nach entsprechender Beugung an der Rückseite RS aus verschiedenen Vorzugsrichtungen VZ21 e, VZ22e, VZ23e auf die Vorderseite VS des Lichtleiters LL. Dort tritt das durch die Mittel zum Umlenken F1, F2, F3 umgelenkte Licht oder die umgelenkten Lichtbündel schließlich jeweils mit verschiedenen Vorzugsrichtungen VZ21 a, VZ22a, VZ23a wieder aus dem Lichtleiter LL aus.

Die derart austretenden Lichtbündel (mit den verschiedenen Vorzugsrichtungen VZ21 a, VZ22a, VZ23a) bilden jeweils zusammen mit den am gleichen Ort der Vorderseite VS unmittelbar (ohne eine Umlenkung durch die Mittel zum Umlenken erfahren zu haben) ausgekoppelten Lichtbündeln (mit den verschiedenen Vorzugsrichtungen VZ11, VZ12, VZ13) ein Gesamtlichtbündel mit jeweils einer Gesamtvorzugsrichtung G1, G2, G3 und einem relativ breiten Öffnungswinkel. Die Vorzugsrichtungen VZ21 a, VZ22a, VZ23a und damit die Gesamtvorzugsrichtungen G1, G2, G3 werden dabei gezielt durch die verschiedenen Ausführungen, insbesondere Neigungen oder Steigungen, der verschiedenen Mittel zum Umlenken F1, F2, F3 beeinflusst.

Insbesondere sind dabei die Mittel zum Umlenken F1, F2, F3 derart ausgeführt, dass durch Mittel zum Umlenken umgelenktes an der Vorderseite VS an verschiedenen Austrittsorten austretendes Licht zusammen mit dem an der Vorderseite an verschiedenen Vorder-Auskoppelorten VAK1, VAK2, VAK3 ausgekoppelten Licht an verschiedenen Austrittsorten bzw. Vorder-Auskoppelorten im Wesentlichen eine identische Gesamt-Vorzugsrichtung G1, G2, G3 aufweist, die parallel zur Fahrzuglängsachse liegt. Dadurch kann mit einem diffus leuchtenden Lichtleiter auf besonders effiziente Weise eine vorgegebene Lichtstärkeverteilung für Fahrzeugheckleuchten realisiert werden.

Besonders vorteilhaft aber keinesfalls erforderlich ist es dabei, wenn das am n-ten Hauptreflex an der Rückseite RS ausgekoppelte Lichtbündel nach Umlenkung und Transmission durch den Lichtleiter zusammen mit dem am n-ten Hauptreflex unmittelbar (ohne Umlenkung) ausgekoppelten Licht am selben Ort austritt. Dies ermöglicht eine homogenere Leucht-Erscheinung des Lichtleiters bis hin zu einer äußeren scharfen Grenze.

## Patentansprüche

1. Fahrzeugleuchte
- mit einer Lichtquelle (LQ),
- mit einem Lichtleiter (LL), in den das Licht der Lichtquelle an einer Einkoppelfläche (LEF) eingekoppelt wird,
- mit Mitteln zum Aufweiten des Öffnungswinkels eines einfallenden Lichtbündels, **dadurch gekennzeichnet, dass** die Fahrzeugleuchte Mittel (F1,F2,F3) zum Umlenken einfallenden Lichts aufweist, die als Facettenstruktur auf einer hinter einer Rückseite (RS) des Lichtleiters (LL) angeordneten Reflektoreinrichtung (R) ausgeführt sind.

2. Fahrzeugleuchte nach Anspruch 1,
bei der Mittel zum Aufweiten durch Streuelemente in dem Lichtleiter (LL) und/oder durch Rauhigkeiten auf zumindest einer Oberfläche des Lichtleiters (LL) realisiert sind.

3. Fahrzeugleuchte nach einem der vorhergehenden Ansprüche,
bei der die Mittel zum Aufweiten derart ausgeführt sind, dass Licht an der Vorderseite (VS) des Lichtleiters (LL) an verschiedenen Vorder-Auskoppelorten (VAK1,VAK2,VAK3) ausgekoppelt wird, und Licht an der Rückseite (RS) des Lichtleiters (LL) an verschiedenen Rück-Auskoppelorten (HAK1,HAK2,HAK3) ausgekoppelt wird,
- wobei das ausgekoppelte Licht in Abhängigkeit von der Entfernung zwischen Einkoppelfläche (LEF) und Vorder-Auskoppelort (VAK1,VAK2,VAK3) bzw. Rück-Auskoppelort (HAK1,HAK2,HAK3) verschiedene Vorzugsrichtungen (VZ11,VZ12,VZ13, VZ21,VZ22,VZ23) aufweist.

4. Fahrzeugleuchte nach einem der vorhergehenden Ansprüche,
bei der die Mittel (F1,F2,F3) zum Umlenken derart ausgeführt sind, dass umgelenktes Licht wieder an der Rückseite (RS) des Lichtleiters (LL) eintritt und an der Vorderseite (VS) des Lichtleiters (LL) an verschiedenen Austrittsorten mit verschiedenen Vorzugsrichtungen (VZ21a,VZ22a,VZ23a) austritt.

5. Fahrzeugleuchte nach einem der vorhergehenden Ansprüche,
bei der die Mittel (F1 ,F2,F3) zum Umlenken derart ausgeführt sind, dass das insgesamt an der Vorderseite (VS) des Lichtleiters (LL) austretende und/oder ausgekoppelte Licht an verschiedenen Orten (VAK1,VAK2,VAK3) auf der Vorderseite (VS) im Wesentlichen eine identische Gesamt-Vorzugsrichtung (G1,G2,G3) aufweist.

6. Fahrzeugleuchte nach einem der vorhergehenden Ansprüche,
bei der die Mittel (F1,F2,F3) zum Umlenken derart ausgeführt sind, dass durch Mittel (F1,F2,F3) zum Umlenken umgelenktes an der Vorderseite (VS) an verschiedenen Austrittsorten (VAK1,VAK2,VAK3) austretendes Licht zusammen mit dem an der Vorderseite an verschiedenen Vorder-Auskoppelorten (VAK1,VAK2,VAK3) ausgekoppelten Licht an verschiedenen Austrittsorten bzw. Vorder-Auskoppelorten (VAK1,VAK2,VAK3) im Wesentlichen eine identische Gesamt-Vorzugsrichtung (G1,G2,G3) aufweist.

7. Fahrzeugleuchte nach einem der vorhergehenden Ansprüche,
bei der die Gesamt-Vorzugsrichtung (G1,G2,G3) parallel zur Fahrzuglängsachse liegt.

8. Fahrzeugleuchte nach einem der vorhergehenden Ansprüche,
bei der Mittel (F1,F2,F3) zum Umlenken derart ausgeführt sind, dass näher an der Lichtquelle (LQ) liegende Mittel (F1,F2,F3) zum Umlenken eine weniger effiziente Umlenkung einfallenden Lichtes bewirken als entfernter zur Lichtquelle (LQ) liegende Mittel (F1,F2,F3) zum Umlenken.

9. Fahrzeugleuchte nach einem der vorhergehenden Ansprüche,
bei der Mittel zum Auskoppeln derart ausgeführt sind, dass näher an der Lichtquelle (LQ) liegende Mittel zum Auskoppeln eine weniger effiziente Auskopplung einfallenden Lichtes bewirken als entfernter zur Lichtquelle liegende Mittel (LQ) zum Auskoppeln.

## Claims

1. A vehicle light
- with a light source (LQ),
- with an optical conductor (LL), into which the light of the light source is coupled on a coupling face (LEF), and
- with means for expanding the aperture angle of an incident light beam, **characterised in that** the vehicle light has means (F1, F2, F3) to deflect incident light, which are configured as a facet structure on a reflector device (R) arranged behind a rear side (RS) of the optical conductor (LL).

2. A vehicle light according to claim 1, wherein means for expansion are realised by scattering elements in the optical conductor (LL) and/or by rough areas on at least one surface of the optical conductor (LL).

3. A vehicle light according to any one of the preceding claims, wherein the means for expansion are configured in such a way that light is coupled out of the front side (VS) of the optical conductor (LL) at various front coupling-out sites (VAK1, VAK2, VAK3), and light is coupled out of the rear side (RS) of the optical conductor (LL) at various rear coupling-out sites (HAK1, HAK2, HAK3),
- wherein the light coupled out, depending on the distance between the coupling face (LEF) and the front coupling-out site (VAK1, VAK2, VAK3) or the rear coupling-out site (HAK1, HAK2, HAK3) has various preferred directions (VZ11, VZ12, VZ13, VZ21, VZ22, VZ23).

4. A vehicle light according to any one of the preceding claims, wherein the means (F1, F2, F3) for deflection are configured in such a way that deflected light enters again at the rear side (RS) of the optical conductor (LL) and exits at the front side (VS) of the optical conductor (LL) at various exit sites in various preferred directions (VZ21 a, VZ22a, VZ23a).

5. A vehicle light according to any one of the preceding claims, wherein the means (F1, F2, F3) for deflection are configured in such a way that the light exiting and/or coupled out at the front side (VS) of the optical conductor (LL), at various sites (VAK1, VAK2, VAK3) on the front side (VS) substantially has an identical overall preferred direction (G1, G2, G3).

6. A vehicle light according to any one of the preceding claims, wherein the means (F1, F2, F3) for deflection are configured in such a way that light deflected by means (F1, F2, F3) for deflection and exiting at the front side (VS) at various exit sites (VAK1, VAK2, VAK3), together with the light coupled out of the front side at various front coupling-out sites (VAK1, VAK2, VAK3), at various exit sites or front coupling-out sites (VAK1, VAK2, VAK3) substantially has an identical overall preferred direction (G1, G2, G3).

7. A vehicle light according to any one of the preceding claims, wherein the overall preferred direction (G1, G2, G3) is parallel to the longitudinal axis of the vehicle.

8. A vehicle light according to any one of the preceding claims, wherein means (F1, F2, F3) for deflection are configured in such a way that means (F1, F2, F3) for deflection located closer to the light source (LQ) bring about a less efficient deflection of incident light than means (F1, F2, F3) located further from the light source (LQ).

9. A vehicle light according to any one of the preceding claims, wherein means for coupling out are configured in such a way that means for coupling out located closer to the light source (LQ) bring about a less efficient coupling out of incident light than means (LQ) for coupling out located further from the light source.

## Revendications

1. Phare de véhicule comportant :
- une source lumineuse (LQ),
- un guide de lumière (LL) dans lequel est couplée la lumière d'une source lumineuse au niveau d'une surface de couplage (LEF),
- des moyens pour élargir l'angle d'ouverture d'un faisceau lumineux
incident,
phare **caractérisé en ce qu'**
il comporte des moyens (F1, F2, F3) pour dévier la lumière incidente, ces moyens étant réalisés sous la forme d'une structure à facettes sur une installation de réflexion (R) située derrière le côté arrière (RS) du guide de lumière (LL).

2. Phare de véhicule selon la revendication 1,
**caractérisé en que**
les moyens pour élargir sont constitués par des éléments de diffraction dans le guide de lumière (LL) et/ou par des rugosités sur au moins une surface du guide de lumière (LL).

3. Phare de véhicule selon l'une des revendications précédentes, **caractérisé en que**
les moyens pour élargir sont réalisés de façon que la lumière soit découplée de la face avant (VS) du guide de lumière (LL) en différents points de découplage avant (VAK1, VAK2, VAK3) et que la lumière sur le côté arrière (RS) du guide de lumière (LL), soit découplée en plusieurs endroits de découplage arrière (HAK1, HAK2, HAK3),
- la lumière découplée ayant différentes directions préférentielles (VZ11, VZ12, VZ13, VZ21, VZ22, VZ23), en fonction de l'éloignement entre la surface d'injection (LEF) et le point de découplage avant (VAK1, VAK2, VAK3) ou le point de découplage arrière (HAK1, HAK2, HAK3).

4. Phare de véhicule selon l'une des revendications précédentes, **caractérisé en que**
les moyens (F1, F2, F3) pour dévier, sont réalisés de façon que la lumière déviée pénètre de nouveau par le côté arrière (RS) du guide de lumière (LL) et sorte sur la face avant (VS) du guide de lumière (LL) en différents points de sortie avec différentes directions préférentielles (VZ21a, VZ22a, VZ23a).

5. Phare de véhicule selon l'une des revendications précédentes, **caractérisé en que**
les moyens (F1, F2, F3) pour dévier, sont réalisés de façon que globalement la lumière sortant de la face avant (VS) du guide de lumière (LL) et/ou la lumière découplée en différents points (VAK1, VAK2, VAK3) de la face avant (VS), présente pratiquement une direction globale préférentielle identique (G1, G2, G3).

6. Phare de véhicule selon l'une des revendications précédentes, **caractérisé en que**
les moyens (F1, F2, F3) pour dévier, sont réalisés de façon que la lumière déviée par les moyens (F1, F2, F3) et sortant de la face avant (VS) en différents points de sortie (VAK1, VAK2, VAK3), avec la lumière découplée de la face avant en différents points de découplage avant (VAK1, VAK2, VAK3), en différents points de sortie ou points de découplage avant (VAK1, VAK2, VAK3), présente pratiquement la même direction préférentielle globale (G1, G2, G3).

7. Phare de véhicule selon l'une des revendications précédentes, **caractérisé en que**
la direction préférentielle globale (G1, G2, G3) est parallèle à l'axe longitudinal du véhicule.

8. Phare de véhicule selon l'une des revendications précédentes, **caractérisé en que**
les moyens (F1, F2, F3) pour dévier, sont réalisés de façon que les moyens (F1, F2, F3) les plus proches de la source lumineuse (LQ), produisent une déviation moins poussée de la lumière incidente, que les moyens (F1, F2, F3) plus éloignés de la source lumineuse (LQ).

9. Phare de véhicule selon l'une des revendications précédentes, **caractérisé en que**
les moyens de découplage sont réalisés de façon que les moyens situés le plus près de la source lumineuse (LQ) pour découpler, produisent un découplage moins poussé de la lumière incidente, que les moyens plus éloignés de la source lumineuse (LQ) pour assurer le découplage.
